# EUROPEAN PATENT SPECIFICATION

(11) **EP 4 604 352 B1**
(45) Date of publication and mention of the grant of the patent: **30.09.2026**
(21) Application number: 25155296.4
(22) Date of filing: 31.01.2025
(51) Int. Cl.: H02J 7/00, H04R 25/00, H02J 7/70

(54) **CHARGER DEVICE FOR HEARING DEVICES**
LADEGERÄT FÜR HÖRGERÄTE
DISPOSITIF DE CHARGE POUR DISPOSITIFS AUDITIFS

(30) Priority: 05.02.2024 EP 24155831
(43) Date of publication of application: 20.08.2025
(73) Proprietor: Oticon A/S, 2765 Smørum (DK)
(72) Inventor: CHRISTENSEN, Lars Steen, 2765 Smørum (DK); VERGMANN, Pernille Randrup, 2765 Smørum (DK); WILLEMS, Sebastian Vedsø, 2765 Smørum (DK); THOMASEN, Anders, 2765 Smørum (DK); PEDERSEN, Thomas, 2765 Smørum (DK); RIEMER, Lars, 2765 Smørum (DK)
(74) Representative: Demant

(56) References cited:
- TW-B- I 610 499
- US-A1- 2017 064 429
- US-A1- 2017 093 079
- US-A1- 2019 268 707

## Description

The present disclosure relates to a charger device configured to charge one or more hearing devices. More particularly, the disclosure relates to a charger device for wireless or wired charging of hearing devices, such as a single hearing device or a set of hearing device. The hearing device may be a hearing aid or an earbud/hearable or the like ear level device.

When charging a device configured to be positioned at an ear of a user, such as a hearing aid or a hearing device or an earbud, either via a wire or wirelessly, using a charger device, the charger device needs power. This could be provided from an internal battery or an external source. An external source may also be used to charge an internal battery, either wired or wirelessly. When using an external power source, either for charging a hearing aid or an internal battery of the charger, the external power source needs an interface. This interface could be based on an USB-type interface, such as a USB-C type interface. The interface preferably detachably connects to a cable, and as users remove such a cable from the interface, a pull-force is exerted on the interface. Thus, there is a risk that the interface break.

Therefore, there is a need to provide a solution that addresses at least some of the above-mentioned problems. The present disclosure provides at least an alternative to the prior art.

Document US 2017/064429 discloses a system, method, and smart case for managing wireless earpieces. The wireless earpieces are detected proximate the smart case. The power utilized by the wireless earpieces is lowered in response to detecting the wireless earpieces proximate the smart case. The wireless earpieces are charged utilizing a battery of the smart case in response to determining the wireless earpieces require charging.

Document TW I 610 499 discloses a connector having a housing and an additional member that is welded to the housing.

Document US 2019/268707 discloses a set of accessory devices where each may establish a respective communication link between the accessory device and an ear-wearable device. A particular accessory device in the set of accessory devices may receive data via the communication link between the particular accessory device and the ear-wearable device. The data comprise information generated based on sensor signals from sensors that monitor a user of the ear-wearable device. The accessory devices perform a health monitoring activity based on the data.

Document US 2017/093079 discloses an electrical receptacle connector includes housing defining a cavity configured to receive a plug portion of a mating connector. A plurality of electrical contacts are secured within a contact assembly that is sealed to the housing with a gasket and held in place by a metallic bracket disposed around an outside surface of the housing.

### SUMMARY

The present disclosure related to a charger device for (re)charging a hearing device. The charger device may be powered by a mains connection, such as a low-voltage connection. The charger device may comprise a battery configured to provide charge power to the hearing device when no mains connection is present or available, such as while the user is travelling or the like. The internal battery may then be charged when the charger is connected to an external power supply, such as a mains power supply. The mains power may be provided from e.g. a 12/24V car supply or a 110/220 V wall socket or the like, or a 5V USB connection to a computer or suitable power supply. The charger device may comprise one or more visual indicators, such as LED lights and/or a graphic display. The visual indicators may be used to communicate information such as "device present", "device being charged", "device partial charge status", "device fully charged". The charger device may comprise a data interface configured to communicate with a server device for providing e.g. software/setting update to the hearing device, such as firmware updates etc. or may be configured to collect data from a hearing device, such as use data, status data, crash data etc. Such collected data may e.g. be stored in the charger device until the device is examined/read at a hearing health care professional or service personnel, or, may be communicated from the charger device via a communications interface either directly via e.g. WIFI or via a connection though a smartphone, to e.g. a server or the like. In such cases, the charger device may include a wireless interface, such as WiFi and/or Bluetooth or another suitable communication interface.

In a first aspect, the present disclosure relates to a charging device configured to receive a hearing device, such as a hearing aid, wherein the charging device comprises a charger housing having a reception part configured to receive at least part of the hearing device. The charging device according to the present disclosure further comprises a power inlet arranged at an opening at the charger housing. The power inlet has an opening configured to receive a specific connector, either a male or female connector. The power inlet may define a power inlet axis or direction. This axis could coincide with an insert direction for the power inlet. This means that when a user inserts a power cable, the plug of the power cable is inserted in the insert direction, along the power inlet axis, into the power inlet (socket). This could mean that when inserting e.g. a plug into the power inlet, the insertion direction would be along the inlet axis. The charging device according to the present disclosure further comprises a substrate arranged within the charger housing. The substrate defines a substrate surface, or simply surface. The substrate defines a first surface and an opposite second surface.

These two surfaces, first and second surfaces, would be the large surfaces (as opposite to an edge side) where e.g. various electronic components would/could be mounted. At one side, e.g. the first side, the power inlet is mounted, such as the power inlet is mounted to the surface of the substrate so that the power inlet axis is substantially perpendicular to the surface of the substrate. The surface of the substrate, or at least a part thereof, would preferably be substantially flat. The power inlet comprises a front end, configured to receive a charger cable, or other suitable input, and a backend. The backend, or back side, is configured or fitted with a plurality of connector legs extending from a power inlet body. The connector leg or legs may be small extensions of the body making up an outer surface of the power inlet. In a mounted state, the connector legs are arranged to extend through the substrate, such as through a hole or opening in the substrate. The connector legs have a tip, or distal end, which are then bent to abut the substrate, such as to abut a backside or opposite side of the substrate, such as the side of the substrate opposite the side where the connector is mounted to. This is contemplated to provide a retention force when the power inlet is being pulled during a process where the user intends to remove a cable connected to the power inlet. It is especially advantageous in a situation where electrical power supplied through the inlet while heating the inlet to a temperature above a melting point of a material such as a soldering material used to retain the inlet and/or provide/improve electrical connection.

The charger device according to the present disclosure provides an easy and simple method for fixation of a connector to a PCB/substrate which will stay fixated and not risk being pulled out of the charger even if the solder joints are overheated and melted, which may happen if a user connects a USB connector which provides a too-high voltage. The charging device may e.g. be configured to receive 5 V, but if the power inlet is a USB-C type interface a user may mistakenly connect a USB-C connector which provides e.g. 48 V, such as on adapted for powering a laptop. The high voltage/power may (over-)heat the connector which in turn melt soler material and thereby loosen the connector from the substrate.

The connector legs may be non-conductive. The connector legs are preferably part of a housing of the power receiver.

Adhesive or solder may be provided at the connector legs. This is contemplated to improve the force needed to remove or dislodge the power inlet, which would improve the reliability of the charger device.

A spacer may be provided between the substrate and the power inlet.

The charging device may comprise a charger antenna element configured to cooperate with an antenna in the hearing device to be charged so that the performance of the hearing device antenna is increased. This could help a hearing device being charged to achieve an improve communication range, such as communication to a user's mobile phone or other computing device. The charger antenna may be incorporated in a charging device without the bent pins as disclosed herein. The charger antenna is contemplated to be useful in that hearing devices, such as hearing aids, have limited space for a BLE (Bluetooth) antenna. Especially completely-in-canal style hearing devices need to be very compact. While the hearing device is in a charger, it is advantageous to have an extended BLE range, so the user can check e.g. the hearing device charge state from the next room. A true BLE quarter-wave antenna should have a length around 30mm, but a completely-in-the-canal hearing device, or even a behind-the-ear hearing device, usually does not have room to accommodate this length of antennas.

When a hearing device is inserted into a charger, the charger may establish a galvanic contact to the hearing device. By e.g. adding an additional contact point and possibly some wiring and circuitry, the BLE antenna in the HI may be extended, either passively or actively. This increases the BLE range. Instead of a third contact point, one of the existing contact points could be used. This is possible because BLE is in the GHz range, and charging is DC so that separation of these two signals is relatively easy by filtering. The charger antenna may either extend the hearing device's internal antenna (contact point at the end of the hearing device antenna), or overriding/supplementing the internal antenna (contact point at beginning of hearing device antenna).

The charger could also supply the whole antenna function: If the hearing device detects that it is in a charger, it could shut down its own antenna. The charger-to-hearing device communication could be in RF (pure antenna signals) or baseband (so the charger modulates and amplifies to RF). This could also apply to other radio signals than BLE type, such as Classic Bluetooth and/or UWB.

The charging device advantageously comprises a charging interface configured to interface with the hearing device to be charged. The charging interface is then configured to provide output power, and wherein the charging interface is further configured to connect to a charger cradle configured to connect to a hearing aid to be charged, wherein a wire and connector is configured to connect to the charging interface during use.

The charging device may comprise a battery configured to provide power via the charging interface. This could be useful for charging a hearing while it is still in use at the user's ear. By enabling charging with the hearing device while active on the ear, the user can avoid range anxiety.

The charger slot inserts could be made removeable, or additional/specialized connectors may be provided. Further, extended wires between the charger and the insert could be provided. The charger may additionally be able to be hung around the neck, such as in a neckband. The charge slots may be made as slim as possible so as to be unobtrusive. The wires could be made to look like an in-ear headset. The charger case should have indicator LEDs for the HD charging state (orange when charging, green when charging finished). The solution could also include an adapter that fits into the slots on the charger, and has wires leading up to the hearing device/adaptor on the ears. This adapter could be stored in the cavity in the charger. The adapter could be separate to the charger.

The charging device according to the present disclosure may comprise a wireless interface configured to receive a wireless communication from an external device. Over-The-Air (OTA) updating of the firmware in a charger is desirable, but requires some sort of radio connection. This adds cost and complexity to the charger. The hearing device usually already have a radio and possibly connection to a smartphone, and already have an OTA update capability. The charger has a (galvanic) connection to the hearing device, and the hearing devices are in the charger for a long time (typically every night/all night). The hearing device and charger are able to communicate via a galvanic interface communicate. By letting the hearing device act as an intermediary in the updating of firmware of the charger, no extra component cost is incurred. The charging device further being configured to the wireless communication to a hearing device being charged. The wireless communication may comprise software updates and/or settings updates to the hearing device and/or the charger device.

A hearing aid may be adapted to provide a frequency dependent gain and/or a level dependent compression and/or a transposition (with or without frequency compression) of one or more frequency ranges to one or more other frequency ranges, e.g. to compensate for a hearing impairment of a user. The hearing aid may comprise a signal processor for enhancing the input signals and providing a processed output signal. The hearing aid may comprise an output unit for providing a stimulus perceived by the user as an acoustic signal based on a processed electric signal. The output unit may a vibrator of a bone conducting hearing aid. The output unit may comprise an output transducer. The output transducer may comprise a receiver (loudspeaker) for providing the stimulus as an acoustic signal to the user (e.g. in an acoustic (air conduction based) hearing aid). The output transducer may comprise a vibrator for providing the stimulus as mechanical vibration of a skull bone to the user (e.g. in a bone-attached or bone-anchored hearing aid). The output unit may (additionally or alternatively) comprise a (e.g. wireless) transmitter for transmitting sound picked up-by the hearing aid to another device, e.g. a far-end communication partner (e.g. via a network, e.g. in a telephone mode of operation, or in a headset configuration).

The hearing aid may comprise an input unit for providing an electric input signal representing sound. The input unit may comprise an input transducer, e.g. a microphone, for converting an input sound to an electric input signal. The input unit may comprise a wireless receiver for receiving a wireless signal comprising or representing sound and for providing an electric input signal representing said sound.

The wireless receiver and/or transmitter may e.g. be configured to receive and/or transmit an electromagnetic signal in the radio frequency range (3 kHz to 300 GHz). The wireless receiver and/or transmitter may e.g. be configured to receive and/or transmit an electromagnetic signal in a frequency range of light (e.g. infrared light 300 GHz to 430 THz, or visible light, e.g. 430 THz to 770 THz).

The hearing aid may comprise a directional microphone system adapted to spatially filter sounds from the environment, and thereby enhance a target acoustic source among a multitude of acoustic sources in the local environment of the user wearing the hearing aid. The directional system may be adapted to detect (such as adaptively detect) from which direction a particular part of the microphone signal originates. This can be achieved in various different ways as e.g. described in the prior art. In hearing aids, a microphone array beamformer is often used for spatially attenuating background noise sources. The beamformer may comprise a linear constraint minimum variance (LCMV) beamformer. Many beamformer variants can be found in literature. The minimum variance distortionless response (MVDR) beamformer is widely used in microphone array signal processing. Ideally the MVDR beamformer keeps the signals from the target direction (also referred to as the look direction) unchanged, while attenuating sound signals from other directions maximally. The generalized sidelobe canceller (GSC) structure is an equivalent representation of the MVDR beamformer offering computational and numerical advantages over a direct implementation in its original form.

The hearing aid may comprise antenna and transceiver circuitry allowing a wireless link to an entertainment device (e.g. a TV-set), a communication device (e.g. a telephone), a wireless microphone, a separate (external) processing device, or another hearing aid, etc. The hearing aid may thus be configured to wirelessly receive a direct electric input signal from another device. Likewise, the hearing aid may be configured to wirelessly transmit a direct electric output signal to another device. The direct electric input or output signal may represent or comprise an audio signal and/or a control signal and/or an information signal.

In general, a wireless link established by antenna and transceiver circuitry of the hearing aid can be of any type. The wireless link may be a link based on near-field communication, e.g. an inductive link based on an inductive coupling between antenna coils of transmitter and receiver parts. The wireless link may be based on far-field, electromagnetic radiation. Preferably, frequencies used to establish a communication link between the hearing aid and the other device is below 70 GHz, e.g. located in a range from 50 MHz to 70 GHz, e.g. above 300 MHz, e.g. in an ISM range above 300 MHz, e.g. in the 900 MHz range or in the 2.4 GHz range or in the 5.8 GHz range or in the 60 GHz range (ISM=Industrial, Scientific and Medical, such standardized ranges being e.g. defined by the International Telecommunication Union, ITU). The wireless link may be based on a standardized or proprietary technology. The wireless link may be based on Bluetooth technology (e.g. Bluetooth Low-Energy technology, e.g. LE audio), or Ultra WideBand (UWB) technology.

The hearing aid may be constituted by or form part of a portable (i.e. configured to be wearable) device, e.g. a device comprising a local energy source, e.g. a battery, e.g. a rechargeable battery. The hearing aid may e.g. be a low weight, easily wearable, device, e.g. having a total weight less than 100 g, such as less than 20 g, such as less than 5 g.

The hearing aid may comprise a 'forward' (or 'signal') path for processing an audio signal between an input and an output of the hearing aid. A signal processor may be located in the forward path. The signal processor may be adapted to provide a frequency dependent gain according to a user's particular needs (e.g. hearing impairment). The hearing aid may comprise an 'analysis' path comprising functional components for analyzing signals and/or controlling processing of the forward path. Some or all signal processing of the analysis path and/or the forward path may be conducted in the frequency domain, in which case the hearing aid comprises appropriate analysis and synthesis filter banks. Some or all signal processing of the analysis path and/or the forward path may be conducted in the time domain.

An analogue electric signal representing an acoustic signal may be converted to a digital audio signal in an analogue-to-digital (AD) conversion process, where the analogue signal is sampled with a predefined sampling frequency or rate fₛ, fₛ being e.g. in the range from 8 kHz to 48 kHz (adapted to the particular needs of the application) to provide digital samples xₙ (or x[n]) at discrete points in time tₙ (or n), each audio sample representing the value of the acoustic signal at tₙ by a predefined number N_{b} of bits, N_{b} being e.g. in the range from 1 to 48 bits, e.g. 24 bits. Each audio sample is hence quantized using N_{b} bits (resulting in 2^{Nb} different possible values of the audio sample). A digital sample x has a length in time of 1/fₛ, e.g. 50 µs, for *fₛ* = 20 kHz. A number of audio samples may be arranged in a time frame. A time frame may comprise 64 or 128 audio data samples. Other frame lengths may be used depending on the practical application.

The hearing aid may comprise an analogue-to-digital (AD) converter to digitize an analogue input (e.g. from an input transducer, such as a microphone) with a predefined sampling rate, e.g. 20 kHz. The hearing aids may comprise a digital-to-analogue (DA) converter to convert a digital signal to an analogue output signal, e.g. for being presented to a user via an output transducer.

The hearing aid may be configured to operate in different modes, e.g. a normal mode and one or more specific modes, e.g. selectable by a user, or automatically selectable. A mode of operation may be optimized to a specific acoustic situation or environment, e.g. a communication mode, such as a telephone mode. A mode of operation may include a low-power mode, where functionality of the hearing aid is reduced (e.g. to save power), e.g. to disable wireless communication, and/or to disable specific features of the hearing aid.

The hearing aid may comprise a number of detectors configured to provide status signals relating to a current physical environment of the hearing aid (e.g. the current acoustic environment), and/or to a current state of the user wearing the hearing aid, and/or to a current state or mode of operation of the hearing aid. Alternatively or additionally, one or more detectors may form part of an *external* device in communication (e.g. wirelessly) with the hearing aid. An external device may e.g. comprise another hearing aid, a remote control, and audio delivery device, a telephone (e.g. a smartphone), an external sensor, etc.

The hearing aid may comprise a movement detector, e.g. an acceleration sensor. The movement detector may be configured to detect movement of the user's facial muscles and/or bones, e.g. due to speech or chewing (e.g. jaw movement) and to provide a detector signal indicative thereof. The hearing aid may be configured to enter certain modes based on signal from the moment detector.

The present disclosure relates to a charging device configured to receive a hearing device, such as a hearing aid, wherein the charging device comprises: a charger housing having a reception part configured to receive at least part of the hearing device, a power inlet arranged with an opening at the charger housing, the power inlet defining a power inlet axis, a substrate arranged within the charger housing, the substrate defining a substrate surface, wherein the power inlet is mounted to the substrate surface and the power inlet axis is substantially perpendicular to the substrate surface, wherein the power inlet comprises a front end configured to receive a charger cable and a back end configured with a plurality of connector legs extending from a power inlet body, wherein in a mounted state, the connector legs extend through the substrate, the connector legs having a tip which is bend to abut the substrate. Such a charger device and/or hearing aid may include any of the features mentioned throughout the present disclosure.

The hearing aid may comprise a hearing instrument, e.g. a hearing instrument adapted for being located at the ear or fully or partially in the ear canal of a user, e.g. a headset, an earphone, an ear protection device or a combination thereof. A hearing system may comprise a speakerphone (comprising a number of input transducers (e.g. a microphone array) and a number of output transducers, e.g. one or more loudspeakers, and one or more audio (and possibly video) transmitters e.g. for use in an audio conference situation), e.g. comprising a beamformer filtering unit, e.g. providing multiple beamforming capabilities.

**In** the present context, a hearing aid, e.g. a hearing instrument, refers to a device, which is adapted to improve, augment and/or protect the hearing capability of a user by receiving acoustic signals from the user's surroundings, generating corresponding audio signals, possibly modifying the audio signals and providing the possibly modified audio signals as audible signals to at least one of the user's ears. Such audible signals may e.g. be provided in the form of acoustic signals radiated into the user's outer ears and/or acoustic signals transferred as mechanical vibrations to the user's inner ears through the bone structure of the user's head and/or through parts of the middle ear.

The hearing aid may be configured to be worn in any known way, e.g. as a unit arranged behind the ear with a tube leading radiated acoustic signals into the ear canal or with an output transducer, e.g. a loudspeaker, arranged close to or in the ear canal, as a unit entirely or partly arranged in the pinna and/or in the ear canal, as a unit, e.g. a vibrator, attached to a fixture implanted into the skull bone, etc. The hearing aid may comprise a single unit or several units communicating (e.g. acoustically, electrically or optically) with each other. The loudspeaker may be arranged in a housing together with other components of the hearing aid, or may be an external unit in itself (possibly in combination with a flexible guiding element, e.g. a dome-like element).

A hearing aid may be adapted to a particular user's needs, e.g. a hearing impairment. A configurable signal processing circuit of the hearing aid may be adapted to apply a frequency and level dependent compressive amplification of an input signal. A customized frequency and level dependent gain (amplification or compression) may be determined in a fitting process by a fitting system based on a user's hearing data, e.g. an audiogram, using a fitting rationale (e.g. adapted to speech). The frequency and level dependent gain may e.g. be embodied in processing parameters, e.g. uploaded to the hearing aid via an interface to a programming device (fitting system), and used by a processing algorithm executed by the configurable signal processing circuit of the hearing aid.

A 'hearing system' refers to a system comprising one or two hearing aids, and a 'binaural hearing system' refers to a system comprising two hearing aids and being adapted to cooperatively provide audible signals to both of the user's ears. Hearing systems or binaural hearing systems may further comprise one or more 'auxiliary devices', which communicate with the hearing aid(s) and affect and/or benefit from the function of the hearing aid(s). Such auxiliary devices may include at least one of a remote control, a remote microphone, an audio gateway device, an entertainment device, e.g. a music player, a wireless communication device, e.g. a mobile phone (such as a smartphone) or a tablet or another device, e.g. comprising a graphical interface. Hearing aids, hearing systems or binaural hearing systems may e.g. be used for compensating for a hearing-impaired person's loss of hearing capability, augmenting or protecting a normal-hearing person's hearing capability and/or conveying electronic audio signals to a person. Hearing aids or hearing systems may e.g. form part of or interact with public-address systems, active ear protection systems, handsfree telephone systems, car audio systems, entertainment (e.g. TV, music playing or karaoke) systems, teleconferencing systems, classroom amplification systems, etc.

The invention is set out in the appended set of claims.

### BRIEF DESCRIPTION OF DRAWINGS

The aspects of the disclosure may be best understood from the following detailed description taken in conjunction with the accompanying figures. The figures are schematic and simplified for clarity, and they just show details to improve the understanding of the claims, while other details are left out. Throughout, the same reference numerals are used for identical or corresponding parts. The individual features of each aspect may each be combined with any or all features of the other aspects. These and other aspects, features and/or technical effect will be apparent from and elucidated with reference to the illustrations described hereinafter in which:
FIG. 1 schematically shows a hearing aid;
FIG. 2 schematically shows a substrate in a charger device and a power inlet according to the present disclosure;
FIG. 3 schematically shows steps of inserting attaching a power inlet to a substrate; and
FIG 4 shows a charger substrate with four connector legs.

The figures are schematic and simplified for clarity, and they just show details which are essential to the understanding of the disclosure, while other details are left out. Throughout, the same reference signs are used for identical or corresponding parts.

Further scope of applicability of the present disclosure will become apparent from the detailed description given hereinafter. However, it should be understood that the detailed description and specific examples, while indicating preferred embodiments of the disclosure, are given by way of illustration only. Other embodiments may become apparent to those skilled in the art from the following detailed description.

The detailed description set forth below in connection with the appended drawings is intended as a description of various configurations. The detailed description includes specific details for the purpose of providing a thorough understanding of various concepts. However, it will be apparent to those skilled in the art that these concepts may be practiced without these specific details. Several aspects of the apparatus and methods are described by various blocks, functional units, modules, components, circuits, steps, processes, algorithms, etc. (collectively referred to as "elements"). Depending upon particular application, design constraints or other reasons, these elements may be implemented using electronic hardware, computer program, or any combination thereof.

The electronic hardware may include micro-electronic-mechanical systems (MEMS), integrated circuits (e.g. application specific), microprocessors, microcontrollers, digital signal processors (DSPs), field programmable gate arrays (FPGAs), programmable logic devices (PLDs), gated logic, discrete hardware circuits, printed circuit boards (PCB) (e.g. flexible PCBs), and other suitable hardware configured to perform the various functionality described throughout this disclosure, e.g. sensors, e.g. for sensing and/or registering physical properties of the environment, the device, the user, etc. Computer program shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

The present application relates to the field of hearing aids and specifically in the field of chargers for hearing aids.

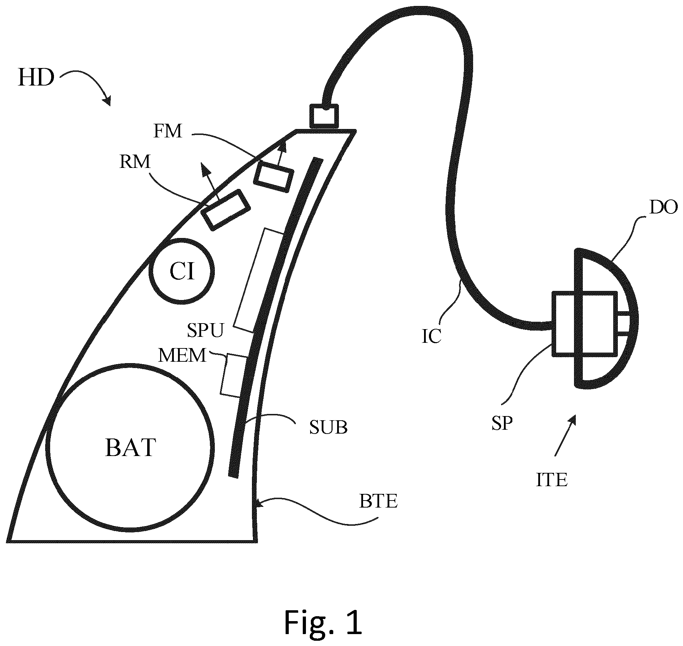

Fig. 1, schematically illustrates a hearing device HD, where the hearing device is shaped as a hearing aid of the behind-the-ear hearing aid. As disclosed herein, the hearing device may be provided in other form-factors and without hearing loss compensation, i.e. as a earphone e.g. for music and/or phone conversation as a wireless headset. The hearing device HD comprises an interconnection member IC connecting a behind-the-ear housing BTE with an in-the-ear housing ITE. Two microphones constitute an input system for the hearing device, which are connected to a processor SPU and a memory MEM arranged in connection with a substrate SUB. A battery BAT powers the hearing device. Here the battery BAT is a secondary battery, i.e. rechargeable.

The hearing device HD comprises a charge interface CI configured to receive power from an external source and provide this as charging power to the battery during a recharging process. The charge interface CI may be a wired interface and/or a wireless interface. A wired part of such a charge interface may include one or more, such as two, pins which are configured to connect to corresponding pads in a charger device. A wireless part of a charge interface may include one or more coils configured to receive a wireless charge field emitted by a charger device having a charge coil. The charge interface CI may be connected through a converter in order to charge the battery BAT.

The hearing device HD may comprise an RF antenna in connection with a suitable wireless interface, such as a radio configured to communicate using a data protocol, such as Bluetooth/Bluetooth Low Energy or the like. The hearing device HD may comprise an inductive communication interface with a coil, wherein the inductive communication interface is configured to communicate with a hearing device to be placed at the contralateral ear of a user. The inductive communication interface may be configured to communicate with other devices than another hearing device. The coil for the inductive communication interface may be the same coil as the charger interface coil used to pick up wireless charge energy. Insert assemblies are used to be fixated by screws which is time consuming in production. We have also seen issues with cracked and broken screw towers. So, an easier way of mounting and fixate the inserts are good for both production and reliability. Also moulding of this solution is simpler than traditional snap solutions.

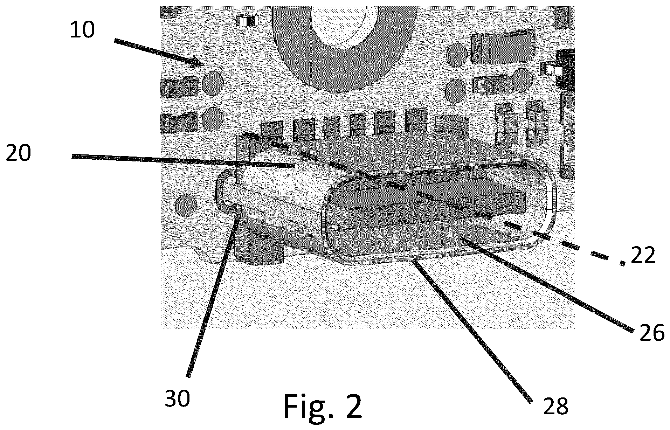

Fig. 2 schematically illustrates a substrate 10 of charger device. The charging device is configured to receive a hearing device and provide power the built-in battery thereby recharging it. In a charger housing a reception part is configured to receive at least part of the hearing device, and establish a power connection thereto, either via contact pins or wireless coils for charging. The charger device comprises a power inlet 20 arranged with an opening 26 at the charger housing. The power inlet 20 defines a power inlet axis 22.

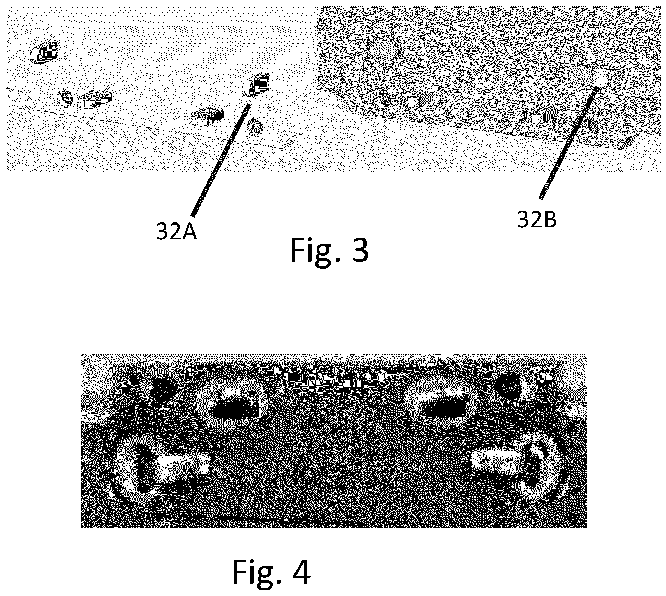

The substrate 10 is arranged within the charger housing. The substrate defines a surface of the substrate. The power inlet 20 is mounted to the substrate 10 surface and the power inlet 22 axis is substantially perpendicular to the surface of the substrate. The power inlet 20 comprises a front end 28 configured to receive a charger cable and a backend 30 configured with a plurality of connector legs extending from a power inlet body. In a mounted state, the connector legs extend through the substrate, as illustrated in Figs. 3 and 4. The connector legs having a tip or distal end which is bent to abut the substrate.

Fig. 3 schematically illustrates two states of a power inlet being mounted to a substrate. At 32A a tip or distal end of a connector leg extending through a hole or opening in the substrate. In this state, the tip is unbent and simply extends straight out of the hope. At 32B the tip or distal end is bent so that it abuts or touch the substrate. With this angle on the connector leg an additional force is needed to remove/separate the connector and substrate. By bending two such legs, as illustrated at the right-hand side of Fig. 3, even further force is needed. This increases the safety of the charger device as the risk of the power inlet (body) being dislodged from the mounted state. In Fig. 4,it is seen that two legs are bent while two others extend straight. To further increase safety, adhesive or solder may be provided at the connector legs.

## Claims

1. A charging device configured to receive a hearing device, such as a hearing aid, wherein the charging device comprises:
a charger housing having a reception part configured to receive at least part of the hearing device,
a power inlet (20) arranged with an opening (26) at the charger housing, the power inlet (20) having a power inlet opening (26) configured to receive a plug,
a substrate (10) arranged within the charger housing, the substrate (10) defining a surface, wherein the power inlet (20) is mounted to the surface and (20) wherein the power inlet (20) comprises a front end (28) configured to receive a charger cable
**characterized in that**
the power inlet (20) is arranged substantially perpendicular to the surface of the substrate (10), and
the power inlet comprises a back end (30) configured with a plurality of connector legs extending from a power inlet body, wherein in a mounted state, the connector legs are arranged to extend through the substrate (10), the connector legs having a tip which is then bent to abut the substrate (10).

2. The charging device according to claim 1, wherein the connector legs are non-conductive.

3. The charging device according to claim 1 or 2, wherein adhesive or solder is provided at the connector legs.

4. The charging device according to any one of claims 1-3, wherein a spacer is provided between the substrate (10) and the power inlet (20).

5. The charging device according to any one of claims 1-4, wherein the charging device comprises a charger antenna element configured to cooperate with an antenna in the hearing device to be charged so that the performance of the hearing device antenna is increased.

6. The charging device according to any one of claims 1-5, wherein charging device comprises a charging interface configured to interface with the hearing device to be charged, wherein the charging interface is configured to provide output power, and wherein the charging interface is further configured to connect to a charger cradle configured to connect to a hearing aid to be charged, wherein a wire and connector is configured to connect to the charging interface during use.

7. The charging device according to claim 6, wherein the charging device comprises a battery configured to provide power via the charging interface.

8. The charging device according to any one of claims 1-7, wherein the charging device further comprises a communication interface configured to receive a communication from an external device via a hearing device being stored in the charger device.

9. The charging device according to claim 8, wherein the wireless communication comprises software updates and/or settings updates to the hearing device and/or the charger device.

## Patentansprüche

1. Ladegerät, das dazu konfiguriert ist, ein Hörgerät, wie etwa eine Hörhilfe, aufzunehmen, wobei das Ladegerät Folgendes umfasst:
ein Ladegehäuse, das ein Empfangsteil aufweist, das dazu konfiguriert ist, mindestens einen Teil des Hörgeräts aufzunehmen,
einen Leistungseinlass (20), der mit einer Öffnung (26) an dem Ladegehäuse angeordnet ist, wobei der Leistungseinlass (20) eine Leistungseinlassöffnung (26) aufweist, die dazu konfiguriert ist, einen Stecker aufzunehmen,
ein Substrat (10), das innerhalb des Ladegehäuses angeordnet ist, wobei das Substrat (10) eine Oberfläche definiert, wobei der Leistungseinlass (20) an der Oberfläche montiert ist und wobei der Leistungseinlass (20) ein vorderes Ende (28) umfasst, das dazu konfiguriert ist, ein Ladekabel aufzunehmen,
**dadurch gekennzeichnet, dass**
der Leistungseinlass (20) im Wesentlichen senkrecht zu der Oberfläche des Substrats (10) angeordnet ist, und der Leistungseinlass ein hinteres Ende (30) umfasst, das mit einer Vielzahl von Verbindungsschenkeln konfiguriert ist, die sich von einem Leistungseinlasskörper erstrecken, wobei, in einem montierten Zustand, die Verbindungsschenkel dazu angeordnet sind, sich durch das Substrat (10) zu erstrecken, wobei die Verbindungsschenkel eine Spitze aufweisen, die dann gebogen ist, um an das Substrat (10) anzustoßen.

2. Ladegerät nach Anspruch 1, wobei die Verbindungsschenkel nicht leitend sind.

3. Ladegerät nach Anspruch 1 oder 2, wobei Klebstoff oder Lot an den Verbindungsschenkeln bereitgestellt ist.

4. Ladegerät nach einem der Ansprüche 1-3, wobei ein Abstandhalter zwischen dem Substrat (10) und dem Leistungseinlass (20) bereitgestellt ist.

5. Ladegerät nach einem der Ansprüche 1-4, wobei das Ladegerät ein Ladeantennenelement umfasst, das dazu konfiguriert ist, mit einer Antenne in dem zu ladenden Hörgerät zusammenzuwirken, sodass die Leistung der Hörgeräteantenne erhöht wird.

6. Ladegerät nach einem der Ansprüche 1-5, wobei das Ladegerät eine Ladeschnittstelle umfasst, die dazu konfiguriert ist, sich mit dem zu ladenden Hörgerät zu verbinden, wobei die Ladeschnittstelle dazu konfiguriert ist, Ausgangsleistung bereitzustellen, und wobei die Ladeschnittstelle ferner dazu konfiguriert ist, sich mit einer Ladestation zu verbinden, die dazu konfiguriert ist, sich mit einem zu ladenden Hörgerät zu verbinden, wobei ein Draht und ein Verbinder dazu konfiguriert sind, sich während der Verwendung mit der Ladeschnittstelle zu verbinden.

7. Ladegerät nach Anspruch 6, wobei das Ladegerät eine Batterie umfasst, die dazu konfiguriert ist, Leistung über die Ladeschnittstelle bereitzustellen.

8. Ladegerät nach einem der Ansprüche 1-7, wobei das Ladegerät ferner eine Kommunikationsschnittstelle umfasst, die dazu konfiguriert ist, eine Kommunikation von einem externen Gerät über ein Hörgerät zu empfangen, das in dem Ladegerät gelagert ist.

9. Ladegerät nach Anspruch 8, wobei die drahtlose Kommunikation Softwareaktualisierungen und/oder Einstellungsaktualisierungen des Hörgeräts und/oder des Ladegeräts umfasst.

## Revendications

1. Dispositif de charge conçu pour recevoir un dispositif auditif, tel qu'une prothèse auditive, dans lequel le dispositif de charge comprend :
un boîtier de chargeur ayant une partie de réception conçue pour recevoir au moins une partie du dispositif auditif,
une entrée d'alimentation (20) agencée avec une ouverture (26) au niveau du boîtier de chargeur, l'entrée d'alimentation (20) ayant une ouverture d'entrée d'alimentation (26) conçue pour recevoir une fiche,
un substrat (10) agencé à l'intérieur du boîtier de chargeur, le substrat (10) définissant une surface, dans lequel l'entrée d'alimentation (20) est montée sur la surface et dans lequel l'entrée d'alimentation (20) comprend une extrémité avant (28) conçue pour recevoir un câble de chargeur
**caractérisé en ce que**
l'entrée d'alimentation (20) est agencée sensiblement perpendiculaire à la surface du substrat (10), et
l'entrée d'alimentation comprend une extrémité arrière (30) conçue avec une pluralité de pattes de connecteur s'étendant à partir d'un corps d'entrée d'alimentation, dans lequel, dans un état monté, les pattes de connecteur sont agencées pour s'étendre à travers le substrat (10), les pattes de connecteur ayant une pointe qui est ensuite pliée pour venir en butée contre le substrat (10).

2. Dispositif de charge selon la revendication 1, dans lequel les pattes de connecteur sont non conductrices.

3. Dispositif de charge selon la revendication 1 ou 2, dans lequel un adhésif ou une soudure est prévu au niveau des pattes de connecteur.

4. Dispositif de charge selon l'une quelconque des revendications 1 à 3, dans lequel un espaceur est prévu entre le substrat (10) et l'entrée d'alimentation (20).

5. Dispositif de charge selon l'une quelconque des revendications 1 à 4, dans lequel le dispositif de charge comprend un élément d'antenne de chargeur conçu pour coopérer avec une antenne dans le dispositif auditif à charger de sorte que la performance de l'antenne du dispositif auditif soit augmentée.

6. Dispositif de charge selon l'une quelconque des revendications 1 à 5, dans lequel le dispositif de charge comprend une interface de charge conçue pour s'interfacer avec le dispositif auditif à charger, dans lequel l'interface de charge est conçue pour fournir une puissance de sortie, et dans lequel l'interface de charge est en outre conçue pour se connecter à un berceau de chargeur conçu pour se connecter à une prothèse auditive à charger, dans lequel un fil et un connecteur sont conçus pour se connecter à l'interface de charge pendant l'utilisation.

7. Dispositif de charge selon la revendication 6, dans lequel le dispositif de charge comprend une batterie conçue pour fournir l'alimentation via l'interface de charge.

8. Dispositif de charge selon l'une quelconque des revendications 1 à 7, dans lequel le dispositif de charge comprend en outre une interface de communication conçue pour recevoir une communication provenant d'un dispositif externe via un dispositif auditif stocké dans le dispositif de chargeur.

9. Dispositif de charge selon la revendication 8, dans lequel la communication sans fil comprend des mises à jour logicielles et/ou des mises à jour de paramètres du dispositif auditif et/ou au dispositif de chargeur.
